# EUROPÄISCHE PATENTSCHRIFT

(11) **EP 2 452 837 B1**
(45) Veröffentlichungstag und Bekanntmachung des Hinweises auf die Patenterteilung: **09.11.2016**
(21) Anmeldenummer: 11180693.1
(22) Anmeldetag: 09.09.2011
(51) Int. Cl.: B60C 11/00, B60C 13/00, B60C 19/08

(54) **Nutzfahrzeugreifen**
Commercial vehicle tyres
Pneu de véhicule utilitaire

(30) Priorität: 16.11.2010 DE 102010060575
(43) Veröffentlichungstag der Anmeldung: 16.05.2012
(73) Patentinhaber: Continental Reifen Deutschland GmbH, 30165 Hannover (DE)
(72) Erfinder: De Risi, Francesca, 30161 Hannover (DE); Weinreich, Hajo, 31552 Apelern (DE); Fritzsche, Juliane, 30163 Hannover (DE)
(74) Vertreter: Finger, Karsten

(56) Entgegenhaltungen:
- WO-A1-98/38050
- DE-A1-102008 058 881
- GB-A- 544 757

## Beschreibung

Die Erfindung betrifft einen Nutzfahrzeugreifen in Radialbauart mit einem mehrlagigen Gürtel, einer Radialkarkasse, Seitenwänden und einem Laufstreifen, welcher aus einer radial äußeren Laufstreifencap aus zumindest einer Ruß gefüllten Gummimischung und einer radial inneren Laufstreifenbase besteht.

Es ist bekannt, dass es für die Reduktion des Rollwiderstandes von Reifen von Vorteil ist, Reifenbauteile, insbesondere im Bereich des Laufstreifens, aus Kautschukmischungen mit niedriger Hysterese herzustellen. Eine niedrige Hysterese wird durch Verwendung gering aktiver Füllstoffe, insbesondere durch den Einsatz einer geringen Menge an aktivem Füllstoff, wie Ruß, und/oder den Ersatz von Ruß durch Siliziumdioxid (Silica, Kieselsäure) erreicht. Mit diesen Maßnahmen geht eine Erhöhung des elektrischen Widerstandes der betreffenden Kautschukmischung bzw. des aus dieser Mischung hergestellten Bauteils einher. Die derart rollwiderstandsarm ausgelegten Reifenbauteile sind mangels Rußperkolation elektrisch nicht mehr leitfähig. Es ist daher meistens durch besondere Maßnahmen für eine ausreichende elektrische Leitfähigkeit des Reifens, welche zur Ableitung elektrischer Ladungen als Folge der elektrostatischen Aufladung des Fahrzeuges notwendig ist, zu sorgen. Eine Vielzahl von Patentdokumenten befasst sich mit der Herstellung und Ausführung von rollwiderstandsarm ausgelegten Radialreifen für Personenkraftwagen, insbesondere auch mit der Ausführung elektrisch leitfähiger Passagen in Reifen. Bei Reifen für Personenkraftwagen ist üblicherweise die Laufstreifenmischung für die Laufstreifencap mit Silica gefüllt, somit elektrisch nicht leitfähig, wobei es zur Ableitung statischer Elektrizität aus der Lauffläche bekannt ist, aus einem "Streifen" der elektrisch leitfähig ausgeführten Laufstreifenbase einen sogenannten Carbon-Center-Beam zu bilden, der eine Verbindung zwischen der Lauffläche und der Laufstreifenbase bildet. Aus der DE 10 2008 058 881 A1 ist ein Fahrzeugluftreifen bekannt, dessen Laufstreifencap und dessen Seitenwände aus elektrisch nicht leitfähigen Gummimischungen bestehen. Zwischen dem elektrisch nicht leitfähigen Laufstreifenteil und den elektrisch leitfähigen Seitenwänden ist jeweils über den Reifenumfang eine elektrisch leitfähige Passage durch einen wellenförmig in Umfangsrichtung verlaufenden Streifen aus elektrisch leitfähigem Gummimaterial hergestellt.

Aus der DE 198 50 766 B4 ist ein rollwiderstandsarmer Fahrzeugluftreifen bekannt, bei dem die Laufstreifenbase einen mittleren Bereich aus einer ersten Gummimischung und zwei beidseitig nach axial außen anschließende Bereiche aus einer zweiten Gummimischung aufweist. Die zweite Gummimischung ist härter und hysteresereicher als die erste Gummimischung. Zwischen dem mittleren Bereich und der Laufstreifencap ist ein Carbon-Center-Beam angeordnet, der sich vom Gürtel bis zur Lauffläche erstreckt und aus einer elektrisch leitfähigen Gummimischung mit einem hohen Rußanteil besteht.

Aus der gattungsbildenden WO 98/38050A1 ist ein Nutzfahrzeugreifen mit einem Laufstreifen bekannt, welcher aus seiner Laufstreifencap und einer Laufstreifenbase zusammengesetzt ist, welche aus Gummimischungen hergestellt sind, die als Zusatz vorwiegend Silica enthalten, sodass beide Schichten elektrisch nicht leitfähig sind. Die Laufstreifencap ist mittels mindestens eines ringförmig eingelegten Streifens leitfähig gemacht, der sich senkrecht zum Laufstreifen erstreckt. Die elektrische Verbindung zwischen der Laufstreifencap und der elektrisch leitfähigen Gummierungsschicht des Gürtels erfolgt mittels eines weiteren Streifens aus einer leitfähigen Gummimischung, welcher die Laufstreifenbase durchsetzt. Aus der GB 544757 A ist ein Diagonalreifen bekannt, dessen Laufstreifen aus einer Acetylenruß enthaltenden Gummimischung hergestellt ist. Radial innerhalb des Laufstreifens verläuft ein die beiden Seitenwände verbindender Gummiteil, welcher, ebenso wie die Seitenwände aus einer Gummimischung mit einem hohen elektrischen Wiederstand hergestellt ist.

Bei Fahrzeugluftreifen für Nutzfahrzeuge ist es unerlässlich, die Laufstreifencap, also jenen Teil des Laufstreifens, welcher mit der Straße in Kontakt kommt, aus einer Ruß gefüllten Kautschukmischung herzustellen, insbesondere um gute Abriebseigenschaften sicherzustellen. Auch bei Nutzfahrzeugreifen wird es jedoch zunehmend wichtig, den Rollwiderstand zu senken.

Der Erfindung liegt daher die Aufgabe zugrunde, einen Nutzfahrzeugreifen der eingangs genannten Art derart auszuführen, dass sein Rollwiderstand reduziert ist.

Gelöst wird die gestellte Aufgabe erfindungsgemäß dadurch, dass die Laufstreifenbase aus Gummimischungen bzw. aus einer Gummimischung besteht, welche elektrisch nicht leitfähig sind bzw. ist, als Füllstoff Silica enthalten bzw. enthält und deren dynamische Steifigkeit um mindestens 10 % geringer ist als die dynamische Steifigkeit der Gummimischung(en) der Laufstreifencap.

Bei einem erfindungsgemäß ausgeführten Nutzfahrzeugreifen ist daher die Laufstreifenbase rollwiderstandsarm ausgeführt, sodass der Rollwiderstand des Reifens insgesamt verringert ist, ohne dass die Gesamtperformance und insbesondere auch die Abriebseigenschaften beeinträchtigt werden. Die Gummimischung(en) in der Laufstreifenbase selbst kann bzw. können mit Ruß unterhalb der Perkolationsschwelle und /oder mit Silica gefüllt sein. Dabei ist es für einen geringen Rollwiderstand des Reifens besonders günstig, wenn die Laufstreifenbase aus Gummimischungen bzw. aus einer Gummimischung besteht, deren dynamische Steifigkeit, die um mindestens 10 % geringer ist als die dynamische Steifigkeit der Gummimischung(en) der Laufstreifencap.

Insbesondere sollte ferner die Laufstreifenbase aus Gummimischungen bzw. aus einer Gummimischung bestehen, deren tan δ um mindestens 10 % geringer ist als der tan δ der Gummimischung(en) der Laufstreifencap (6).

Bei einer bevorzugten Ausführungsform der Erfindung wird eine weitere Senkung des Rollwiderstandes des Reifens dadurch erzielt, dass auch die Seitenwände aus einer elektrisch nicht leitfähigen Gummimischung bestehen, wobei in der Laufstreifenbase zumindest ein, den Unterbau mit der Laufstreifencap verbindender Carbon-Center-Beam angeordnet ist. Die letztere Maßnahme gewährleistet eine Ableitung elektrischer Ladungen bei nicht leitfähigen Seitenwänden.

Seitenwände aus einer elektrisch nicht leitfähigen, insbesondere mit Silica gefüllten Gummimischung sollten eine dynamische Steifigkeit und insbesondere einen tan δ aufweisen, die bzw. der um mindestens 10 % geringer ist als die dynamische Steifigkeit bzw. der tan δ der Gummimischung(en) der Laufstreifencap.

Weitere Merkmale, Vorteile und Einzelheiten der Erfindung werden nun anhand der Zeichnung, die schematisch ein Ausführungsbeispiel darstellt, näher beschrieben.

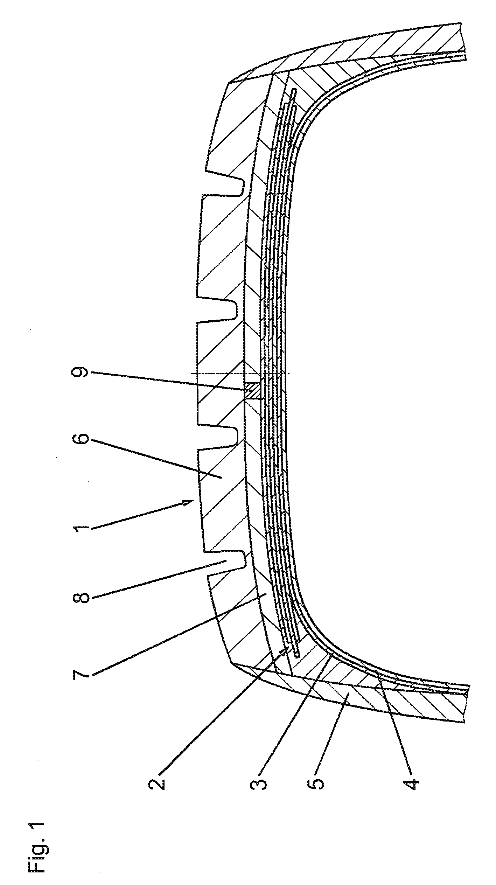

Die einzige Zeichnungsfigur, Fig. 1, zeigt eine Querschnittsdarstellung des Laufstreifenbereiches eines erfindungsgemäßen Fahrzeugluftreifens für Nutzfahrzeuge.

Die Erfindung befasst sich mit einer besonderen Ausführung des Laufstreifens eines Fahrzeugluftreifens in Radialbauart für Nutzfahrzeuge. Fig. 1 zeigt von den Bauteilen eines solchen Reifens einen Laufstreifen 1, einen Gürtel 2, welcher beispielhaft mit vier Gürtellagen herkömmlichen Aufbaus dargestellt ist, einer Radialkarkasse 3, einer luftdichten Innenschicht 4 und Seitenwänden 5, von welchen lediglich die radial äußeren Endabschnitte dargestellt sind, welche seitlich des Laufstreifens 1 verlaufen.

Der Laufstreifen 1 besteht aus einer radial äußeren Gummischicht, der Laufstreifencap 6, und aus einer radial inneren Gummischicht, der Laufstreifenbase 7. In der Laufstreifencap 6 ist die Laufstreifenprofilierung ausgebildet, von welcher in Fig. 1 beispielhaft einige Umfangsnuten 8 dargestellt sind. Bei einem Nutzfahrzeugreifen für Schwerlastfahrzeuge beträgt die Gesamtdicke des Laufstreifens üblicherweise zwischen 10 mm und 35 mm, wobei die Laufstreifenbase 7 eine Dicke von 2 mm bis 10 mm aufweist.

Die Laufstreifencap 6 besteht aus einer für den jeweiligen Einsatzzweck des Nutzfahrzeugreifens geeigneten mit Ruß gefüllten Gummimischung, welche insbesondere eine gute Abriebsbeständigkeit und gute Handling- und Nassgriffeigenschaften sicherstellen soll. Die Gummimischung der Laufstreifencap 6 ist somit elektrisch leitfähig. Die Gummimischung für die Laufstreifenbase 7 enthält entweder keinen oder nur einen geringen Anteil an Ruß, an Stelle von Ruß oder eines Teiles des Rußes kann die Laufstreifenbase 7 als Füllstoff Silica (SiO₂) enthalten, der Anteil an Ruß ist jedenfalls derart gering, dass die Laufstreifenbase 7 elektrisch nicht leitfähig ist. Es ist bekannt, dass Ruß in Laufstreifenmischungen, im Vergleich zu anderen Füllstoffen wie Silica, eine hohe Hysterese und folglich einen schlechten Rollwiderstand des Reifens verursacht. Die Laufstreifenbase 7 ist daher insbesondere durch den Einsatz einer geringen Menge an aktivem Füllstoff -unterhalb der Perkolationsschwelle der Mischung- und insbesondere durch den Einsatz von Silica anstelle von Ruß rollwiderstandsarm ausgeführt.

Die Seitenwände 5 können aus einer Ruß gefüllten, elektrisch leitfähigen Gummimischung bestehen. In diesem Fall sorgen die Seitenwände 5 für die Ableitung elektrischer Ladungen. Es ist jedoch von Vorteil, als weitere, den Rollwiderstand des Reifens reduzierende Maßnahme die Seitenwände 5 aus einer Gummimischung herzustellen, welche, analog zur Laufstreifenbase 7 höchstens eine geringe Menge an aktivem Füllstoff (Ruß) und als Füllstoff vorzugsweise Silica enthält. Die derart ausgeführten Seitenwände 5 sind daher elektrisch nicht leitfähig. Die Seitenwände 5 sind üblicherweise mit einem im Wulstbereich angeordneten, als Rimstrip bezeichneten Bauteil aus einer elektrisch leitfähigen Gummimischung in Kontakt, sodass über die metallische Felge für eine Ableitung elektrischer Ladungen gesorgt ist.

Um bei elektrisch nicht leitfähigen Seitenwänden 5 eine ausreichende elektrische Leitfähigkeit im Laufstreifenbereich sicherzustellen, ist zumindest eine elektrisch leitfähige Passage, die über den Gesamtumfang des Laufstreifens und durch die Laufstreifenbase 7 verläuft, vorgesehen. Diese Passage ist bei der dargestellten Ausführungsform von einem über den Reifenumfang verlaufenden Carbon-Center-Beam 9 aus einer elektrisch leitfähigen Kautschukmischung gebildet, welcher als ein in der Laufstreifenbase 7 eingesetzter einige mm breiter Streifen ausgebildet ist und eine Verbindung der Laufstreifencap 6 mit dem Unterbau, der elektrisch leitfähigen Gürtelgummierung, herstellt. Der Carbon-Center-Beam 9 besteht aus einer elektrisch leitfähigen, Ruß gefüllten Gummimischung, beispielsweise aus der für die Laufstreifencap 6 verwendeten Gummimischung.

Die Gummimischungen für die Laufstreifenbase 7 und die Seitenwände 5 - wenn letztere rollwiderstandsarm ausgelegt werden - weisen einen dynamischen Speichermodul E' (bei 55 °C ermittelt durch eine DMA-Messung gemäß DIN 53513 bei dynamischer Verformungsamplitude von 0.2 - 12 % und 0.2 % Vorverformung bei 10 Hz) auf, welche um mindestens 10 % kleiner ist als die dynamische Steifigkeit E' der Laufstreifencap 6 und des Carbon-Center-Beams 9. Der Verlustwinkel tan δ (bei 55 °C ermittelt durch eine DMA-Messung gemäß DIN 53513 bei dynamischer Verformungsamplitude von 0.2 - 12 % und 0.2 % Vorverformung bei 10 Hz) der Laufstreifenbase 7 und der Seitenwände 5 ist um mindestens 10 % kleiner als der Verlustwinkel tan δ der Laufstreifencap 6 und des Carbon-Center-Beams 9. Typische, für den Rollwiderstand besonders günstige Wertebereiche für die dynamischen Steifigkeiten E' und die Verlustwinkel tan δ sind wie folgt:

| **Bauteil** | **E' [MPa]** | **tan δ** |
|---|---|---|
| Laufstreifenbase | um mindestens 10% geringer als E' der Laufstreifencap | um mindestens 10% geringer als tan δ der Laufstreifencap |
| Laufstreifencap | 2-9 | < 0.220 |
| Seitenwand | 2-8 | < 0.250 |
| Carbon-Center-Beam | 2-9 | < 0.220 |

Die Erfindung ist auf die dargestellten und beschriebenen Ausführungsformen nicht eingeschränkt. So ist es beispielsweise möglich, dass sowohl die Laufstreifencap als auch die Laufstreifenbase aus mehreren Schichten jeweils unterschiedlicher Gummimischungen aufgebaut sind. Die unterschiedlichen Gummimischungen der Laufstreifencap bzw. der Laufstreifenbase können sich beispielsweise durch ihre Zusammensetzungen der Kautschukkomponenten oder die Anteile an aktiven/inaktiven Füllstoffen unterscheiden. Sämtliche in der Laufstreifenbase enthaltenen Gummimischungen weisen gemäß der Erfindung eine geringere dynamische Steifigkeit E' und einen kleineren Verlustwinkel tan δ auf als sämtliche für die Laufstreifencap verwendeten Gummimischungen. Die unterschiedlichen Gummimischungen der Laufstreifenbase und der Laufstreifencap können in in radialer Richtung aufeinanderfolgenden Schichten angeordnet sein, es kann jedoch auch vorgesehen sein, die Laufstreifencap und/oder die Laufstreifenbase in axialer Richtung in Abschnitte mit unterschiedlichen Gummimischungen zu teilen.

### Bezugsziffernliste

- 1 .............: Laufstreifen
- 2 .............: Gürtel
- 3 .............: Radialkarkasse
- 4 .............: Innenschicht
- 5 .............: Seitenwand
- 6 .............: Laufstreifencap
- 7 .............: Laufstreifenbase
- 8 .............: Umfangsnut
- 9 .............: Carbon-Center-Beam

## Patentansprüche

1. Nutzfahrzeugreifen in Radialbauart mit einem mehrlagigen Gürtel (2), einer Radialkarkasse (3), Seitenwänden (5) und einem Laufstreifen (1), welcher aus einer radial äußeren Laufstreifencap (6) aus zumindest einer Ruß gefüllten Gummimischung und einer radial inneren Laufstreifenbase (7) besteht, **dadurch gekennzeichnet,**
**dass** die Laufstreifenbase (7) aus Gummimischungen bzw. aus einer Gummimischung besteht, welche elektrisch nicht leitfähig sind bzw. ist, als Füllstoff Silica enthalten bzw. enthält und deren dynamische Steifigkeit (E') um mindestens 10 % geringer ist als die dynamische Steifigkeit (E') der Gummimischung(en) der Laufstreifencap (6).

2. Nutzfahrzeugreifen nach Anspruch 1, **dadurch gekennzeichnet, dass** die Laufstreifenbase (7) aus Gummimischungen bzw. aus einer Gummimischung besteht, deren tan δ um mindestens 10 % geringer ist als der tan δ der Gummimischung(en) der Laufstreifencap (6).

3. Nutzfahrzeugreifen nach Anspruch 1, **dadurch gekennzeichnet, dass** die Seitenwände (5) aus einer elektrisch nicht leitfähigen, vorzugsweise mit Silica gefüllten Gummimischung bestehen, und dass in der Laufstreifenbase (7) zumindest ein, den Unterbau mit der Laufstreifencap (6) verbindender Carbon-Center-Beam (9) angeordnet ist.

4. Nutzfahrzeugluftreifen nach Anspruch 3, **dadurch gekennzeichnet, dass** die Gummimischung der Seitenwände (5) eine dynamische Steifigkeit (E') aufweisen, die um mindestens 10 % geringer ist als die dynamische Steifigkeit (E') der Gummimischung(en) der Laufstreifencap (6).

5. Nutzfahrzeugluftreifen nach Anspruch 3, **dadurch gekennzeichnet, dass** die Gummimischung der Seitenwände (5) einen tan δ aufweisen, der um mindestens 10 % geringer ist als der tan δ der Gummimischung(en) der Laufstreifencap (6).

## Claims

1. Commercial vehicle tyre of a radial type of construction, with a multi-ply breaker belt (2), a radial carcass (3), sidewalls (5) and a tread rubber (1), which consists of a radially outer tread cap (6) comprising at least one rubber compound filled with carbon black and a radially inner tread base (7),
**characterized**
**in that** the tread base (7) consists of rubber compounds or a rubber compound that are or is electrically nonconductive, contain or contains silica as a filler and the dynamic stiffness (E') of which is lower by at least 10% than the dynamic stiffness (E') of the rubber compound(s) of the tread cap (6).

2. Commercial vehicle tyre according to Claim 1, **characterized in that** the tread base (7) consists of rubber compounds or a rubber compound of which the tan δ is lower by at least 10% than the tan δ of the rubber compound(s) of the tread cap (6).

3. Commercial vehicle tyre according to Claim 1, **characterized in that** the sidewalls (5) consist of an electrically nonconductive rubber compound that is preferably filled with silica, and **in that** at least one carbon centre beam (9) connecting the substructure to the tread cap (6) is arranged in the tread base (7).

4. Commercial vehicle tyre according to Claim 3, **characterized in that** the rubber compound of the sidewalls (5) has a dynamic stiffness (E') which is lower by at least 10% than the dynamic stiffness (E') of the rubber compound(s) of the tread cap (6).

5. Commercial vehicle tyre according to Claim 3, **characterized in that** the rubber compound of the sidewalls (5) has a tan δ which is at least 10% lower than the tan δ of the rubber compound(s) of the tread cap (6).

## Revendications

1. Pneu de véhicule utilitaire de construction radiale, comprenant une ceinture multicouche (2), une carcasse radiale (3), des parois latérales (5) et une bande de roulement (1), qui est constituée par une coiffe de bande de roulement radialement extérieure (6) en au moins un mélange de caoutchouc chargé avec du noir de carbone et une base de bande de roulement radialement intérieure (7), **caractérisé en ce que** la base de bande de roulement (7) est constituée par des mélanges de caoutchouc ou un mélange de caoutchouc, qui ne sont pas électriquement conducteurs, contiennent de la silice en tant que charge et dont la rigidité dynamique (E') est au moins 10 % plus faible que la rigidité dynamique (E') du ou des mélanges de caoutchouc de la coiffe de bande de roulement (6).

2. Pneu de véhicule utilitaire selon la revendication 1, **caractérisé en ce que** la base de bande de roulement (7) est constituée de mélanges de caoutchouc ou d'un mélange de caoutchouc dont le tan δ est au moins 10 % plus faible que le tan δ du ou des mélanges de caoutchouc de la coiffe de bande de roulement (6).

3. Pneu de véhicule utilitaire selon la revendication 1, **caractérisé en ce que** les parois latérales (5) sont constituées par un mélange de caoutchouc électriquement non conducteur, de préférence chargé avec de la silice, et **en ce qu'**au moins un longeron central en carbone (9) reliant la couche de base avec la coiffe de bande de roulement (6) est agencé dans la base de bande de roulement (7).

4. Pneu de véhicule utilitaire selon la revendication 3, **caractérisé en ce que** le mélange de caoutchouc des parois latérales (5) présente une rigidité dynamique (E') qui est au moins 10 % plus faible que la rigidité dynamique (E') du ou des mélanges de caoutchouc de la coiffe de bande de roulement (6).

5. Pneu de véhicule utilitaire selon la revendication 3, **caractérisé en ce que** le mélange de caoutchouc des parois latérales (5) présente un tan δ qui est au moins 10 % plus faible que le tan δ du ou des mélanges de caoutchouc de la coiffe de bande de roulement (6).
